# EUROPEAN PATENT APPLICATION

(11) **EP 3 719 307 A1**
(43) Date of publication of application: **07.10.2020**
(21) Application number: 19166602.3
(22) Date of filing: 01.04.2019
(51) Int. Cl.: F03D 17/00

(54) **DISTRIBUTED SYSTEM FOR AND METHOD OF DETECTING POSITION AND/OR SPEED OF A ROTOR BLADE DURING OPERATION OF A WIND TURBINE**

(71) Applicant: Siemens Gamesa Renewable Energy A/S, 7330 Brande (DK)
(72) Inventor: Nagel, Eirik, 24939 Flensburg (DE); Nieuwenhuizen, John, 8700 Horsens (DK)
(74) Representative: Aspacher, Karl-Georg

(57) **Abstract**

A system for detecting rotor blade position and/or rotor blade speed during operation of a wind turbine (1) is provided, the wind turbine (1) including a tower (2) and at least one rotor blade (4). The system comprises a leaky feeder arrangement (10) configured to be mounted at the tower (2) of the wind turbine (1), an RF unit (20) coupled to the leaky feeder arrangement (10) and configured to supply a first radar signal (100) to the leaky feeder arrangement (10) and to receive a second radar signal (200) from the leaky feeder arrangement (10), wherein the second radar signal (200) is reflected from the rotor blade (4) when the first radar signal (100) hits the rotor blade (4), a processing unit (30), and an optical link arrangement (40) interconnecting the processing unit (30) and the RF unit (20). The processing unit (30) is configured to analyse a first signal corresponding to the first radar signal (100) and a second signal corresponding to the second radar signal (200) in order to determine the position and/or the speed of the rotor blade (4). A wind park and a method are also provided.

## Description

### Field of Invention

The present invention relates to wind turbines. More specifically, the present invention relates to a system for detecting rotor blade position and/or rotor blade speed during operation of a wind turbine. The present invention further relates to a wind park comprising such a system and to a method of detecting rotor blade position and/or rotor blade speed during operation of a wind turbine.

### Art Background

In the above defined technical field, systems are known, which comprise a plurality of radar units operatively configured to emit and receive radar signals. The radar units are typically mounted on and around the wind turbine tower, the radar units being positioned so as to measure reflections of an emitted radar signal from the turbine blade. A processing unit is configured to receive measurement data from the radar unit and to determine, by analysis of Doppler shift, time of flight, phase and amplitude in received radar signals relative to transmitted signals due to movement of the blade towards or away from the turbine tower, the velocity of the blade in the direction towards or away from the turbine tower. This permits calculation of the trajectory and, in particular, the absolute speed and position of the blade.

Using radar units to measure blade position based on the Doppler Effect is for example described in EP 2864632 and permits to avoid the installation of other types of sensors on the blades or nacelle of the wind turbine. This reduces manufacturing and maintenance costs of the wind turbine, since sensors positioned on the tower are easier to replace in the field.

However such a solution is not yet optimal considering that for rotating objects, like the rotor blades or the nacelles, installation of a plurality of radar units is required.

A single radar unit may in fact be used but only for detecting the passage of the blade at a single location. At least two radar units (horizontally mounted) are required for following the position of the blade around the nacelle yawing. One radar unit is able to detect the revolution of the blade at a specific position. More than two single radar units may be used for improving redundancy, resolution and confidence of the detection. However, this further increases costs and the need for software resources. Each radar unit requires a dedicated processing unit for analyzing the signals and deriving the position and speed of the blade.

Attempts using leaky feeders arranged e.g. around the wind turbine tower have been made. This involves a significant amount of sensitive electronics.

There may be a need for a flexible and protective way of arranging the components of a leaky feeder based system.

### Summary of the Invention

This need may be met by the subject-matter according to the independent claims. Advantageous embodiments of the present invention are set forth in the dependent claims.

According to a first aspect of the present invention, a system for detecting rotor blade position and/or rotor blade speed during operation of a wind turbine is provided, the wind turbine including a tower and at least one rotor blade. The system comprises (a) a leaky feeder arrangement configured to be mounted at the tower of the wind turbine, (b) an RF unit coupled to the leaky feeder arrangement and configured to supply a first radar signal to the leaky feeder arrangement and to receive a second radar signal from the leaky feeder arrangement, wherein the second radar signal is reflected from the rotor blade when the first radar signal hits the rotor blade, (c) a processing unit, and (d) an optical link arrangement interconnecting the processing unit and the RF unit, (e) wherein the processing unit is configured to analyse a first signal corresponding to the first radar signal and a second signal corresponding to the second radar signal in order to determine the position and/or the speed of the rotor blade.

This aspect of the invention is based on the idea that the optical link arrangement makes it possible to place the RF unit (together with the leaky feeder arrangement) at an appropriate position on a wind turbine while the processing unit (with its complex and sensitive electronics) can be placed at a safer and less exposed location. Furthermore, the processing unit can be arranged together with or form part of other electronic equipment in a wind turbine or in a wind park.

According to an embodiment of the invention, the optical link arrangement comprises a first optical link configured to transmit the first signal from the processing unit to the RF unit and a second optical link configured to transmit the second signal from the RF unit to the processing unit.

In other words, the first optical is dedicated to transmitting the first signal from the processing unit to the RF unit. Thus, the RF unit receives the first signal and uses it to form the first radar signal which is supplied to the leaky feeder arrangement and emitted (leaked) by it.

Similarly, the second optical link is dedicated to transmitting the second signal from the RF unit to the processing unit. Thus, the RF unit receives the second (reflected) radar signal and uses it to form the second signal which is then transmitted via the second optical link to the processing unit.

The first and second optical links may use respective first and second fibres or a single common fibre.

Both the RF unit and the processing unit may comprise suitable interfaces, such as optocouplers, for converting electrical signals into optical signals and vice versa.

According to a further embodiment of the invention, the RF unit is configured to receive the first signal and generate the first radar signal based on the first signal, and the RF unit is configured to generate the second signal based on the second radar signal.

According to a further embodiment of the invention, the RF unit comprises (a) a modulator and/or a transmitter mixer for generating the first radar signal based on the first signal, and (b) a demodulator and/or a receiver mixer for generating the second signal based on the second radar signal.

According to a further embodiment of the invention, the first signal and the second signal are baseband signals or IF signals, and the first radar signal and the second radar signal are RF signals.

According to a further embodiment of the invention, the leaky feeder arrangement comprises a single leaky feeder configured to emit the first radar signal and to receive the second radar signal.

In other words, the single leaky feeder acts both as transmitting antenna and receiving antenna.

According to a further embodiment of the invention, the leaky feeder arrangement comprises a first leaky feeder configured to emit the first radar signal and a second leaky feeder configured to receive the second radar signal.

In this embodiment, the first leaky feeder serves as transmitting antenna and the second leaky feeder serves as receiving antenna.

According to a further embodiment of the invention, the RF unit comprises a transmitter coupled to the leaky feeder arrangement and a receiver coupled to the leaky feeder arrangement.

The transmitter and receiver may be separate units or an integrated transceiver unit.

According to a further embodiment of the invention, the transmitter is coupled to the first leaky feeder and the receiver is coupled to the second leaky feeder.

According to a further embodiment of the invention, the leaky feeder arrangement comprises at least one leaky coaxial cable or at least one leaky waveguide.

A coaxial leaky cable may in particular be suitable in implementations where the first and second electromagnetic signals are radar signals. A leaky waveguide or a leaky stripline may in particular be suitable for embodiments where the first and second electromagnetic signals have higher frequencies.

According to a second aspect of the invention, a wind park is provided. The wind park comprises at least one wind turbine and a system according to the first aspect or any of the above embodiments. The processing unit is located in a wind turbine controller corresponding to the at least one wind turbine or in a wind park controller.

This aspect is essentially based on the same idea as the first aspect discussed above, and allows flexible positioning of the processing unit in a wind turbine controller or in a wind park controller, i.e. at a site remote from the wind turbine itself.

The leaky feeder arrangement may be geometrically configured as an arc around the tower. In particular, the leaky feeder arrangement may be geometrically configured as a loop (or part/segment of a loop) surrounding the tower of the wind turbine. Thereby, by arranging the at least one leaky feeder in a suitable height (e.g. corresponding to the height in which a particular rotor blade section, such as a tip or mid section passes), reflections from the rotor blade will be received for any yaw angle (which may be set in dependency of the wind direction).

According to a third aspect of the invention, a method of detecting rotor blade position and/or rotor blade speed during operation of a wind turbine is provided, the wind turbine including a tower and at least one rotor blade. The method comprises (a) providing a leaky feeder arrangement at the tower of the wind turbine, (b) providing an RF unit coupled to the leaky feeder arrangement, (c) providing an optical link arrangement interconnecting a processing unit and the RF unit, (d) supplying a first radar signal to the leaky feeder arrangement, (e) receiving a second radar signal from the leaky feeder arrangement, wherein the second radar signal is reflected from the rotor blade when the first radar signal hits the rotor blade, and (f) analysing, at the processing unit, a first signal corresponding to the first radar signal and a second signal corresponding to the second radar signal in order to determine the position and/or the speed of the rotor blade.

This aspect is essentially based on the same idea as the first aspect discussed above.

In addition to detecting position and/or speed of a rotor blade, the systems and methods of the present invention may also be implemented to detect further characteristics and properties of a rotor blade, such as rotor blade soiling state or distance from the tower. Furthermore, it may be used to detect other objects, such as birds, bats, ice, intruders, and sea waves, i.e. for the detection of height, direction and speed of waves in offshore applications.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Figure 1 shows a schematic section of a wind turbine utilizing embodiments of the present invention.
Figure 2 shows an overview of a system according to an exemplary embodiment of the present invention.
Figure 3 shows a schematic view of a system according to an exemplary embodiment of the present invention.

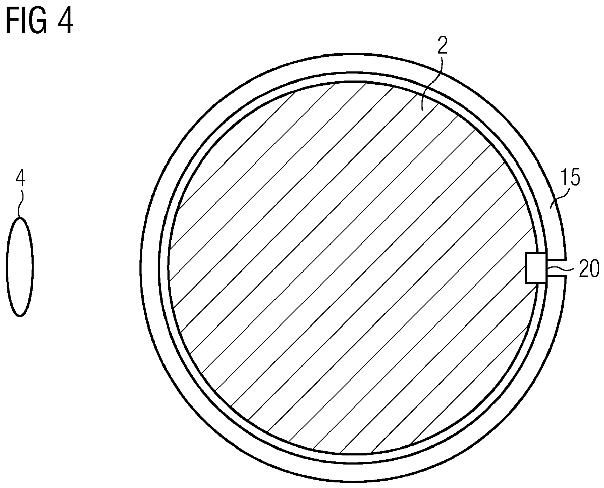

Figure 4 shows another schematic view of parts of the system depicted in figure 3 associated with a wind turbine.
Figure 5 shows a schematic view of part of a system according to a further exemplary embodiment of the present invention.
Figure 6 shows a schematic view of a system according to a further exemplary embodiment of the present invention.

### Detailed Description

The illustrations in the drawings are schematic. It is noted that in different figures, similar or identical elements are provided with the same reference numerals or with reference numerals which differ only within the first digit.

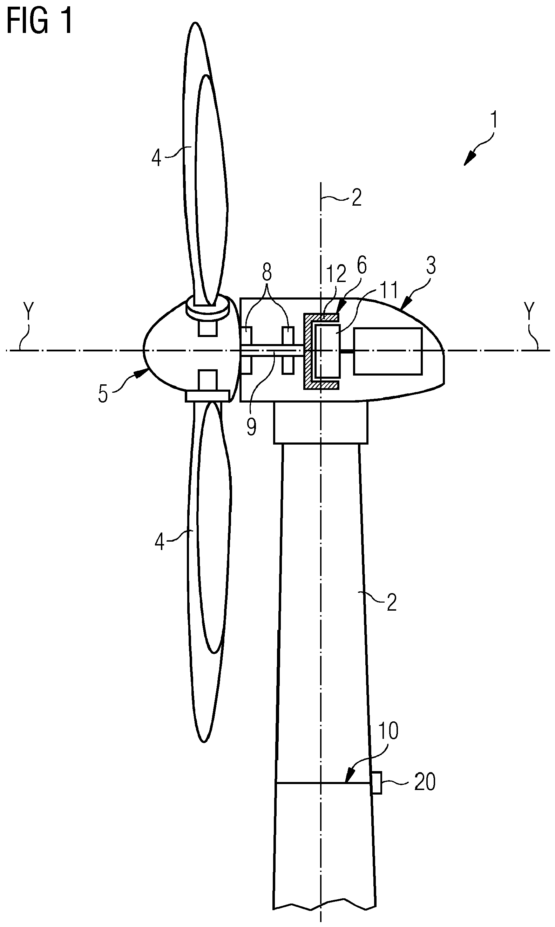

**Figure 1** shows a partial cross-sectional view of a wind turbine 1 including parts of a system for detecting rotor blade position and/or rotor blade speed in accordance with the invention.

More specifically, the wind turbine 1 comprises a tower 2, which is mounted on a non-depicted fundament. A nacelle 3 is arranged on top of the tower 2. In between the tower 2 and the nacelle 3 a yaw angle adjustment device (not shown) is provided, which is capable of rotating the nacelle around a vertical yaw axis Z. The wind turbine 1 further comprises a wind rotor 5 having one or more rotor blades 4 (in the perspective of Figure 1 only two blades 4 are visible). The wind rotor 5 is rotatable around a rotational axis Y. In general, when not differently specified, the terms axial, radial and circumferential in the following are made with reference to the rotational axis Y. The rotor blades 4 extend radially with respect to the rotational axis Y. The wind turbine 1 comprises an electric generator 6 having a stator 11 and a rotor 12. The rotor 12 is rotatable with respect to the stator 11 about the rotational axis Y to generate electrical power. The electric generator 6 and the generation of electrical power through the present invention is not a specific object of the present invention and will therefore not be described in further detail.

Figure 1 further shows the following parts of a system according to the present invention: a leaky feeder arrangement 10 mounted at the tower 2 and an RF unit 20 coupled to the leaky feeder arrangement 10 and configured to supply a first radar signal to the leaky feeder arrangement 10 and to receive a second radar signal from the leaky feeder arrangement 10. The second radar signal is reflected from the rotor blade 4 when the first radar signal hits the rotor blade 4. The system serves to detect rotor blade position and/or rotor blade speed during operation of the wind turbine 1 and will be described in further detail below.

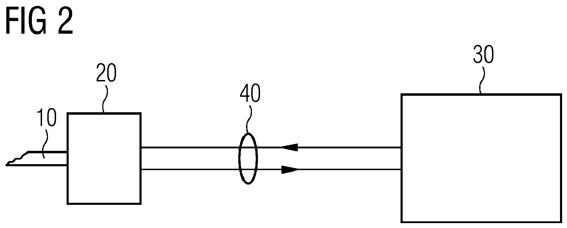

**Figure 2** shows an overview of a system according to an exemplary embodiment of the present invention. More specifically, the system comprises a leaky feeder arrangement 10, an RF unit 20, a processing unit 30 and an optical link arrangement 40.

The leaky feeder arrangement 10 comprises one or more leaky feeders. A leaky feeder is, as will also be discussed in more detail below, an elongate communication component, which leaks an electromagnetic wave that is transmitted along the component. The leaky feeder may be constituted by a leaky coaxial cable or a leaky waveguide or a leaky stripline. The leaky feeder arrangement 10 is configured to be mounted at the tower 2, preferably around a circumference of the tower surface at a vertical position suitable for emitting radar signals towards and receiving reflected radar signals from the rotating rotor blade during operation of the wind turbine 1.

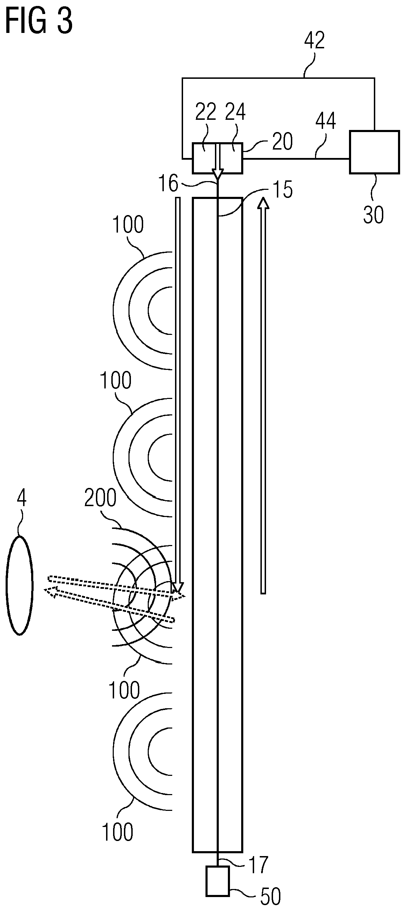

Referring also to **Figure 3**, the leaky feeder 15 comprises a plurality of slots (not shown) that allow the first radar signal 100 to leak out of the leaky feeder 15 along its entire length towards the rotor blade 4 (target object). The slots may, according to possible embodiments, be regularly distributed along the length of the leaky feeder 15. According to other possible embodiments of the present invention, the leaky feeder 15 is a normal coaxial cable with low optical coverage of the outside conductor (mesh or slots/apertures), which also leaks electromagnetic waves.

The leaky feeder 15 may be provided with a heating system (not shown) in case severe over icing conditions are possible. Heating may be provided by air flowing between inside and outside conductors or by electrical current which runs in inner or outer conductors of the leaky feeder 15.

The first radar signal 100 may, according to possible embodiments, be an electromagnetic radar signal or an ultrasonic radar signal. In such cases, the leaky feeder 20 is preferably configured as a leaky coaxial cable. According to other embodiments, particularly where the first radar signal 100 is an electromagnetic signal of higher frequency, the leaky feeder 15 is preferably configured as a leaky waveguide.

In general, according to different embodiments of the present invention, the first radar signal 100 may be of any frequency, provided that it can be transmitted to the rotor blade 4 and be reflected by the rotor blade 4.

When the first radar signal 100 impinges on or hits the rotor blade 4, a reflected second radar signal 200 is transmitted towards the leaky feeder 15. The plurality of slots of the leaky feeder 15 allow the second radar signal 200 to leak into the leaky feeder 15 and propagate towards the RF unit 20.

Returning to **Figure 2**, the RF unit 20 is coupled to the leaky feeder arrangement 10. The RF unit 20 supplies a first radar signal (to be emitted) to the leaky feeder arrangement 10 and receives a second radar signal (reflected from a rotor blade 4) from the leaky feeder arrangement 10. The RF unit 10 is interconnected with processing unit 30 via optical link arrangement 40.

The processing unit 30 determines the position and/or the speed of rotor blade 4 by analysing a first signal corresponding to the first radar signal (i.e. the transmitted radar signal) and a second signal corresponding to the second radar signal (i.e. the reflected radar signal). The processing unit 30 generates the first signal and transmits it to the RF unit 20 via the optical link arrangement 40. The processing unit 30 receives the second signal from the RF unit 20 via the optical link arrangement 40. Thereby, a closed loop is formed that allows precise determination of the position and/or speed of rotor blade 4.

The processing unit 30 analyses the first signal (corresponding to first radar signal 100) and the second signal (corresponding to second radar signal 200) for determining the position, speed, direction and size of the target object. According to known (radar) principles with regard to amplitude, phase, Doppler effect and ToF (Time of Flight), the processing unit 30 is able to compare the first signal and the second signal caused by a moving object and consequently to determine the speed and/or position and/or direction and/or size of such object. The position of such object may be an angle with respect to a rotational axis or the three-dimensional position with respect to a system of Cartesian axes.

The optical link arrangement 40 is configured to transmit the first and second signals between the RF unit 20 and the processing unit 30. The optical link arrangement 40 may comprise a single bidirectional optical link or two separate optical links, one for transmitting the first signal from the processing unit 30 to the RF unit 20 and one for transmitting the second signal from the RF unit 20 to the processing unit 30. The first and second signals may be baseband signals or IF (intermediate frequency) signals are modulated/demodulated and/or mixed by the RF unit 20 in order to correspond to the respective first and second radar signals.

As shown in **Figure 3**, in one embodiment of the system, the leaky feeder arrangement 10 comprises a single leaky feeder 15. The leaky feeder 15 extends between a first end 16 and a second end 17. The first end 16 is connected to RF unit 20 which comprises an electromagnetic transceiver with electromagnetic transmitter 22 and electromagnetic receiver 24. The RF unit 20 is coupled to processing unit 30 via optical links 42 and 44 (forming an optical link arrangement 40). The second end 17 of leaky feeder 15 is connected to final resistance 50. The system is used for detecting the position of a rotational blade 4 of the wind turbine 1. According to the present invention, the respective positions of all the rotational blades 4 of the wind turbine 1 are detectable.

According to embodiments of the present invention, the electromagnetic transmitter 22 and the electromagnetic receiver 24 may both be connected to the first end 15 or to the second end 17 via a signal splitter or y-adapter.

According to other embodiments of the present invention, the electromagnetic transmitter 22 is connected to the first end 16 and the electromagnetic receiver 24 is connected to the second end 17.

The leaky feeder 15 may not be connected directly to the electromagnetic transmitter 22 and to the electromagnetic receiver 24, e.g. a non-leaky feeder cable (i.e. a normal coaxial cable) may be interposed between the leaky feeder 15 and the RF unit 20. A normal coaxial cable may be connected directly to the electromagnetic transmitter 22 and to the electromagnetic receiver 24 or it may be used for interconnection.

According to other embodiments of the present invention, the target object is the nacelle 2 for the detection of the position of the nacelle about the vertical yaw axis Z.

According to other embodiments of the present invention, other target objects may be detected in an area comprising a wind turbine 1, for example animals or intruders or changing waves (in offshore applications).

The leaky feeder 15 of figure 3 is geometrically configured as a rectilinear line. According to other embodiments of the present invention, the leaky feeder 15 may be geometrically configured as an arc.

With reference to **Figure 3**, the leaky feeder 15 is geometrically configured as a circular loop surrounding the tower 2.

According to other embodiments of the present invention, any other geometrical configuration is possible, provided that the first radar signal 100 can be transmitted towards the target object and the second radar signal 200 can be reflected by the target object towards the leaky feeder 15.

The leaky feeder 15 and the RF unit 20 are installed on the tower 2.

According to other embodiments of the present invention, the leaky feeder 15 and the RF unit 20 may not be directly installed on the wind turbine 1, i.e. distanced from the wind turbine 1.

According to other embodiments of the present invention, a plurality of leaky feeders 15 may be used.

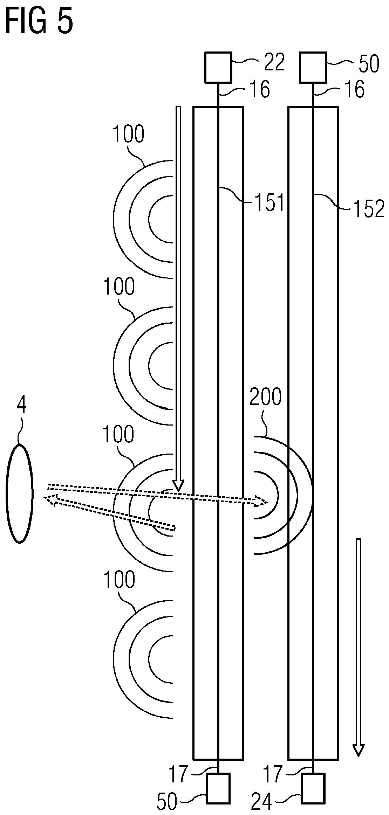

As shown in **Figure 5**, in an embodiment of the system, the leaky feeder arrangement 10 comprises two leaky feeders 151, 152 extending in parallel between respective first ends 16 and second ends 17, respectively adjacent to each other. The two leaky feeders 151, 152 of the leaky feeder arrangement are configured according to an antiparallel configuration, where a first leaky feeder 151 extends between an electromagnetic transmitter 22 connected to the first end 16 and a final resistance 50 connected to the second end 17, while a second leaky feeder 152 extends between a final resistance 50 connected to the first end 16 and an electromagnetic receiver 24 connected to the second end 17.

In such an embodiment, one leaky feeder (the first leaky feeder 151), connected to the electromagnetic transmitter 22, is dedicated to the transmission of the first radar signal 100, while another leaky feeder (the second leaky feeder 152), connected to the electromagnetic receiver 24, is dedicated to receiving the second radar signal 200.

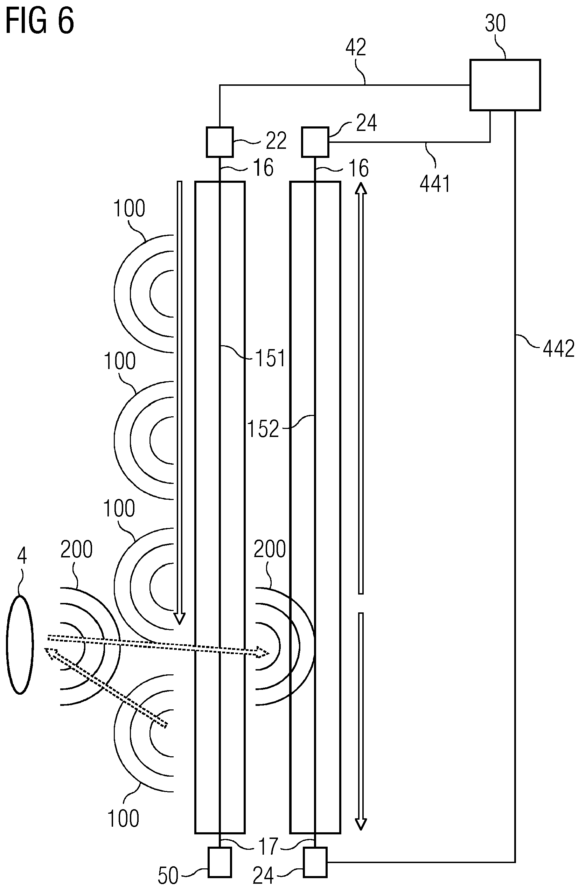

**Figure 6** shows another embodiment of the system according to the present invention, which, similarly to the embodiment of figure 5, comprises two leaky feeders 151, 152. This embodiment differs from the embodiment of figure 5 in that the first leaky feeder 151 extends between an electromagnetic transmitter 22 connected to the first end 16 and a final resistance 50 connected to the second end 17, while the second leaky feeder 152 extends between two electromagnetic receivers 24 respectively connected to the first end 16 and the second end 17. The transmitter 22 is coupled to processing unit 30 via optical link 42 and the receivers 44 are coupled to processing unit 30 via respective optical links 441 and 442. The optical links 42, 441 and 442 form the optical link arrangement 40. The use of two receivers makes it possible to derive phase/time information which could be used to determine further information, in particular the position of one blade 4 with reference to the vertical yaw axis Z.

According to other embodiments of the present invention (not shown, the leaky feeder arrangement 10 of the system may comprise more than two leaky feeders 15. Such a plurality of leaky feeders 15 comprising a first and a second group of leaky feeders 20 respectively connected to one or more electromagnetic transmitters 22 and to one or more electromagnetic receivers 24. Each of the plurality of leaky feeders 15 may be conveniently geometrically configured for optimally following the trajectories of the target objects or of a plurality of target objects.

The optical link arrangements in the above embodiments allow spatial separation of the leaky feeder arrangement 10 and RF unit 20 on the one hand and the processing unit 30 on the other hand. Thereby, the sensitive and complex electronics of the processing unit 30 can be arranged at a suitable place which is well protected against environmental influences and easy to reach for maintenance. Furthermore, in connection with wind parks or wind farms comprising a plurality of wind turbine, the processing units 30 of each wind turbine may be arranged centrally and may thus even share hardware resources.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. System for detecting rotor blade position and/or rotor blade speed during operation of a wind turbine (1), the wind turbine (1) including a tower (2) and at least one rotor blade (4), the system comprising:
a leaky feeder arrangement (10) configured to be mounted at the tower (2) of the wind turbine (1),
an RF unit (20) coupled to the leaky feeder arrangement (10) and configured to supply a first radar signal (100) to the leaky feeder arrangement (10) and to receive a second radar signal (200) from the leaky feeder arrangement (10), wherein the second radar signal (200) is reflected from the rotor blade (4) when the first radar signal (100) hits the rotor blade (4),
a processing unit (30), and
an optical link arrangement (40) interconnecting the processing unit (30) and the RF unit (20),
wherein the processing unit (30) is configured to analyse a first signal corresponding to the first radar signal (100) and a second signal corresponding to the second radar signal (200) in order to determine the position and/or the speed of the rotor blade (4).

2. The system according to the preceding claim, wherein the optical link arrangement comprises a first optical link (42) configured to transmit the first signal from the processing unit to the RF unit and a second optical link (44, 441, 442) configured to transmit the second signal from the RF unit to the processing unit.

3. The system according to any of the preceding claims, wherein the RF unit (10) is configured to receive the first signal and generate the first radar signal based on the first signal, and wherein the RF unit (10) is configured to generate the second signal based on the second radar signal.

4. The system according to any of the preceding claims, wherein the RF unit (10) comprises
a modulator and/or a transmitter mixer for generating the first radar signal based on the first signal, and
a demodulator and/or a receiver mixer for generating the second signal based on the second radar signal.

5. The system according to any of the preceding claims, wherein the first signal and the second signal are baseband signals or IF signals, and wherein the first radar signal and the second radar signal are RF signals.

6. The system according to any of the preceding claims, wherein the leaky feeder arrangement (10) comprises a single leaky feeder (15) configured to emit the first radar signal (100) and to receive the second radar signal (200).

7. The system according to any of claims 1 to 5, wherein the leaky feeder arrangement (10) comprises a first leaky feeder (151) configured to emit the first radar signal (100) and a second leaky feeder (152) configured to receive the second radar signal (200).

8. The system according to any of the preceding claims, wherein the RF unit (10) comprises a transmitter (22) coupled to the leaky feeder arrangement (10) and a receiver (24) coupled to the leaky feeder arrangement.

9. The system according to claims 7 and 8, wherein the transmitter (22) is coupled to the first leaky feeder (151) and the receiver (24) is coupled to the second leaky feeder (152) .

10. The system according to any of the preceding claims, wherein the leaky feeder arrangement (10) comprises at least one leaky coaxial cable or at least one leaky waveguide.

11. A wind park comprising at least one wind turbine (1) and a system according to any of the preceding claims, wherein the processing unit (30) is located in a wind turbine controller corresponding to the at least one wind turbine or in a wind park controller.

12. A method of detecting rotor blade position and/or rotor blade speed during operation of a wind turbine (1), the wind turbine (1) including a tower (2) and at least one rotor blade (4), the method comprising:
providing a leaky feeder arrangement (10) at the tower (2) of the wind turbine (1),
providing an RF unit (20) coupled to the leaky feeder arrangement (10),
providing an optical link arrangement (40) interconnecting a processing unit (30) and the RF unit (20),
supplying a first radar signal (100) to the leaky feeder arrangement (10),
receiving a second radar signal (200) from the leaky feeder arrangement (10), wherein the second radar signal (200) is reflected from the rotor blade (4) when the first radar signal (100) hits the rotor blade (4), and
analysing, at the processing unit (30), a first signal corresponding to the first radar signal (100) and a second signal corresponding to the second radar signal (200) in order to determine the position and/or the speed of the rotor blade (4).
